# EUROPÄISCHE PATENTSCHRIFT

(11) **EP 1 200 241 B1**
(45) Veröffentlichungstag und Bekanntmachung des Hinweises auf die Patenterteilung: **12.05.2004**
(21) Anmeldenummer: 00943883.9
(22) Anmeldetag: 23.06.2000
(51) Int. Cl.: B29C 47/70, F16K 11/20

(54) **WECHSELVERTEILER FÜR HOCHVISKOSE FLÜSSIGKEITEN**
TWO-WAY DISTRIBUTOR FOR HIGH VISCOUS FLUIDS
REPARTITEUR D'ECOULEMENT SELECTIF POUR FLUIDES A VISCOSITE ELEVEE

(30) Priorität: 24.06.1999 DE 19928860
(43) Veröffentlichungstag der Anmeldung: 02.05.2002
(73) Patentinhaber: Zimmer Aktiengesellschaft, 60388 Frankfurt am Main (DE)
(72) Erfinder: FINKELDEI, Ferdinand, D-60388 Frankfurt am Main (DE); SCHNAUS, Walter, D-63517 Rodenbach (DE)
(74) Vertreter: Meyer-Dulheuer, Karl-Hermann, Dr.
(86) Internationale Anmeldenummer: PCT/EP2000/005875
(87) Internationale Veröffentlichungsnummer: WO 2001/000384

(56) Entgegenhaltungen:
- GB-A- 2 125 942
- JP-A- 52 063 419
- US-A- 4 066 097
- US-A- 5 269 348
- PATENT ABSTRACTS OF JAPAN vol. 015, no. 407 (M-1169), 17. Oktober 1991 (1991-10-17) & JP 03 168475 A (FUJI TECHNO KOGYO KK), 22. Juli 1991 (1991-07-22)

## Beschreibung

Die Erfindung betrifft einen Wechselverteiler für hochviskose Flüssigkeiten, welcher einen zentralen Verteilungsraum, in dem eine Produktleitung I und zwei Produktventile münden, aufweist, wobei jedes der Produktventile aus einem als Führungszylinder ausgebildeten Gehäuse mit einer seitlich abzweigenden Produktleitung II und einer Gehäuseerweiterung auf der der Abzweigung der Produktleitung II gegenüberliegenden Seite, sowie einem im Gehäuse in axialer Richtung beweglichen Ventilkolben mit Ventilkopf, der in geschlossener Position in einen in die Wandung des zentralen Verteilungsraums eingelassenen Ventilsitz eingreift und wahlweise einem Hilfsventil besteht.

Insbesondere betrifft die Erfindung eine Vorrichtung zur wechselseitigen Verteilung von Polymerschmelze auf zwei wechselseitig betriebene Behandlungsaggregate, wie beispielsweise zwei Polymerfilter oder Verarbeitungsextruder und Granulator.

Produktverteiler mit einer Produktzuleitung und mindestens zwei Produktventilen, die gleichzeitig oder wechselseitig betrieben werden können, sind bekannt (US-Patente 5 269 348 und 5 499 652). Derartige Produktverteiler sollen möglichst frei von Toträumen sein, da die verlängerte Verweilzeit des Produktes in derart strömungsarmen Zonen zu einer Beeinträchtigung der Produktqualität, bei Polymeren zur Zersetzung und Vernetzung führt.

So weisen die Ventile des Produktverteilers nach US 5 269 348 ein einseitig erweitertes, als Führungszylinder ausgebildetes Gehäuse mit einer seitlich abgezweigten Produktableitung und einer Gehäuseerweiterung auf der der Abzweigung der Produktableitung gegenüberliegenden Seite auf, sowie einen im Gehäuse in axialer Richtung beweglichen Ventilkolben mit einem Ventilkopf, der in geschlossener Position in einen in die Wandung der Produktzuleitung eingelassenen Ventilsitz eingreift. Zudem weist der Ventilkopf einen pilzförmigen Verdrängeraufsatz auf, welcher bei geschlossenem Ventil vollständig in den zentralen Verteilungsraum unter Ausbildung eines den Produktfluss ermöglichenden Spaltes zur Wandung des Verteilerraumes positioniert ist, und dessen Schaft bei geöffnetem Ventil in Höhe der Abzweigung der Produktableitung positioniert ist zu einer gleichmäßigen, totraumfreien Strömung innerhalb des Ventils führen. Um Stagnationen in der Produktzuleitung zu vermeiden, muss ein Teil des Produktes abgezweigt und kontinuierlich einem Sammelbehälter oder dgl. zugeführt werden. Bei dem Produktverteiler nach US-Patent 5 499 652 wird der zentrale Verteilungsraum durch einen Strömungsverdränger auf ein möglichst geringes Volumen gebracht. Beide Vorschläge sind akzeptabel für Produktverteiler, bei denen sämtliche Produktventile im wesentlichen ständig geöffnet sind, reichen aber nicht aus bei Wechselverteilern, bei denen stets eines der beiden Produktventile geschlossen ist.

Die JP-A-52063419 beschreibt einen Wechselverteiler, der einen zentralen Verteilungsraum aufweist, in dem eine Produktzuleitung und zwei Produktventile münden, wobei die Produktventile Y-förmig zur Produktzuleitung angeordnet sind. Jedes der Produktventile besteht aus einem als Führungszylinder ausgebildeten Gehäuse mit einer seitlich abzweigenden Produktableitung sowie einem im Gehäuse in axialer Richtung beweglichen Ventilkolben mit Ventilkopf, der in geschlossener Position in einen Ventilsitz eingreift.

Aufgabe der vorliegenden Erfindung ist es, einen Wechselverteiler der eingangs genannten Art so abzuändern, dass trotz eines ständig wechselseitig geschlossenen Produktventils die Produktströmung völlig gleichmäßig durch den zentralen Verteilungsraum und das zweite geöffnete Produktventil fließt, ohne Ausbildung von Toträumen, insbesondere im Verteilungsraum. Des weiteren sollten Zersetzungen oder Vernetzungen von Produktresten in dem jeweils geschlossenen Ventil soweit möglich vermieden werden.

Die Lösung dieser Aufgabe erfolgt erfindungsgemäß durch einem Wechsehverteiler gemäß Anspruch 1.

Vorzugsweise weist das Produktventilgehäuse (4) im Bereich der Gehäuseerweiterung (5) einen Ventilsitz (13) auf, in den der Ventilkopf eines innerhalb eines als Führungszylinder ausgebildeten Gehäuses beweglichen Ventilkolbens eines Hilfsventils (10) in geschlossener Position eingreift, wobei das Gehäuse des Hilfsventils (10) wahlweise mit verschließbaren Leitungen (15) zur Entlüftung und/oder Produktentleerung und/oder zur Einspeisung von Hilfsmitteln, wie Luft oder Stickstoff oder Dampf, verbunden ist.

Die vorliegende Erfindung zeichnet sich dadurch aus, daß sie die Nachteile normaler Umschalt- oder Wechselventile vermeidet. Der Wechselverteiler ist den herkömmlichen Ventilen weit überlegen. Um seine vorliegenden herausragenden Eigenschaften zu erhalten, wurde der Wechselverteiler erfindungsgemäß mit folgenden Besonderheiten ausgestattet:

Im Gegensatz zu dem aus der US-A-5 269 348 bekannten Verteiler steht keine Fläche oder Kante 90 ° quer zur Strömungsrichtung. Somit kann an keiner Fläche ein Rückstau entstehen, der die Produktverweilzeiten verlängern könnte. Alle Winkelstellungen der Gehäusewandungen entlang dem Produktfluß sind so gehalten, daß sie immer einen stumpfen oder spitzen Winkel bilden, damit können keine Strömungstoträume entstehen. Nennenswerten Totraum gibt es auf Grund der gewählten Passungen nicht. Die Formgebung von Gehäuse und Kolben erlaubt eine Strömungsdynamik, die in der Lage ist, den gesamten Gehäuseraum gleichmäßig zu durchspülen. Trotz der Kolbenkontur der Produktventile ist auf Grund der Erweiterung des Ventilgehäuses an den notwendigen Stellen ein relativ kleiner Gesamt-Druckverlust im Verteiler gegeben.

Bei dem vorliegenden Wechselverteiler sind der Kolben und der Ventilsitz konstruktiv so gehalten, daß sich eine weiche, stoßfrei öffnende Durchflußcharakteristik ergibt. Die Öffnungscharakteristik des Ventils erlaubt es, die Verteiler vollautomatisch umschaltbar zu gestalten. Der Ventilsitz ist neben dem Ventilgehäuse mit die Ursache für die weiche Öffnungscharakteristik. Bewußt langgezogene Öffnungskegel im Gehäuse des Verteilers und die gewählten Toleranzen erlauben ein langsames druckstoßfreies Öffnen des Ventils.

Der pilzförmige Verdrängeraufsatz des geschlossenen Ventils ist so gesetzt, daß er über die Mittellinie in den gegenüberliegenden Rohrraum ragt. So bringt der Pilzkopf dem geraden kurzen Produktdurchgang Widerstand entgegen und zwingt die Hauptmasse des Produktes, den längeren Weg an der Gehäusewandung entlang zu gleiten. Die stumpfen Winkel begünstigen diese Produktführung. Damit ergibt sich ein perfekter Spüleffekt. Um den relativ hohen Druckverlust des Pilzschaftes zu reduzieren und gleichzeitig die Strömungstechnik besonders günstig für die Wandspülung zu beeinflussen, wurde der Schaft an der Basis im Durchmesser soweit möglich reduziert. Der größere Pilzkopf verschiebt die Strömung so weiter zum Fuß des Pilzes hin. Auch dieser Konstruktionspunkt dient der verbesserten Produktflußführung entlang der längeren Außenwandung des Gehäuses.

Das Gehäuse wurde so ausgelegt, daß der Polymerfluß geführt wird. Die Druckdifferenzen sind mit dem eingebauten Ventilkolben so ausgeführt, daß ein Spülen aller Ecken und Kanten gewährleistet ist. Die Stellung der Produktventile untereinander ist so optimiert, daß für den Polymerfluß im Verteilerraum ein optimaler Durchfluß ohne Strömungsschatten gewährleistet ist. Die Winkelstellung von bevorzugt 120° zueinander ist ein Optimum bezogen auf die gesamte Fertigung der Verteilerkonstruktion. Die mögliche Bandbreite der Winkelstellung liegt bei 100 bis 140°.

Die Produktventile des Wechselverteilers können in an sich bekannter Weise mit Hilfsventilen zur Entlüftung und/oder Entleerung und/oder Einspeisung von Hilfsmitteln ausgerüstet sein. Bevorzugt sind die Hilfsventile so angeordnet, daß sie nach dem Betätigen leer laufen können. Dies ist besonders vorteilhaft, wenn die hochviskose Flüssigkeit eine zum Verkohlen neigende Polymerschmelze ist. Eine tangentiale Anbringung des Hilfsventiles am Produktventil ist in vielen Fällen zweckmäßig.

Der erfindungsgemäße Wechselverteiler kann für jegliche viskose Flüssigkeit verwendet werden, die von einer einzelnen Zuleitung wechselseitig auf zwei Ausgangsleitungen zu verteilen ist oder umgekehrt. Eine bevorzugte Anwendung ist die Verteilung einer Polymerschmelze. Beispiele solcher Polymerer sind Polyethylenterephthalat, Polypropylenterephthalat, Polybutylenterephthalat, Polyamid 6, Polyamid 6.6, Polycarbonate, Polyolefine und Copolymere hiervon. In diesem Fall müssen der Verteiler und die Polymerleitungen von einem oder mehreren Heizmänteln, in denen ein geeignetes Wärmeträgermedium zirkuliert, umgeben sein. Andere Beheizungsarten, beispielsweise Heizbänder, können ebenfalls verwendet werden.

Polymere weisen die unangenehme Eigenschaft auf, in einem heißen drucklosen Raum in nieder- und hochviskose Stoffe zu zerfallen. Während die niederviskosen Produkte mit der Zeit gasförmig werden und in die Atmosphäre verschwinden, verkohlen die hochviskosen Produkte. Diese Kohlebildung führt am Ende zur totalen Verstopfung der Leitungen und Ventile. Wird ein Ventil des Wechselverteilers abgestellt und für längere Zeit nicht benutzt, empfiehlt es sich, eine Hydrolyse zur Reinigung des Ventils durchzuführen. Die Hydrolyse vermeidet das Verkohlen des Produktes in dem Ventil. Bevor die Hydrolyse gestartet werden kann, ist das Ventil vollständig von Polymer zu entleeren. Der Dampf ist nicht in der Lage, das Polymer herauszudrücken, da er vorzugsweise einen Druck von 1 bis 2 bar absolut, besonders bevorzugt 1,0 bis 1,3 bar aufweist. Die Dampfeinspeisung für die Hydrolyse erfolgt zweckmäßigerweise über die im Grundkörper der Produktventile angebrachten Hilfsventile. Hierdurch kann die Hydrolyse direkt am Sitz des Polymerventils beginnen. Es muß für die sichere Dampfabfuhr, eventuell beladen mit oligomeren Hydrolyseprodukten, gesorgt werden. Je nachdem, ob das Hilfsventil oder das Produktventil der hydrolytischen Reinigung unterworfen werden, erfolgt die Dampfabfuhr über einen Entlüftungsstutzen des Hilfsventils oder über eine entsprechende Entleerungsöffnung in der Produktleitung II.

Die Erfindung wird nachfolgend anhand von Zeichnungen näher erörtert, wobei
- Fig. 1 und 2: einen erfindungsgemäßen Wechselverteiler ohne bzw. mit Hilfsventilen,
- Fig. 3: den zentralen Verteilungsraum mit einem geschlossenen und einem geöffneten Produktventil, und
- Fig. 4: die Produktströmung durch den zentralen Verteilungsraum der Fig. 3 zeigen.

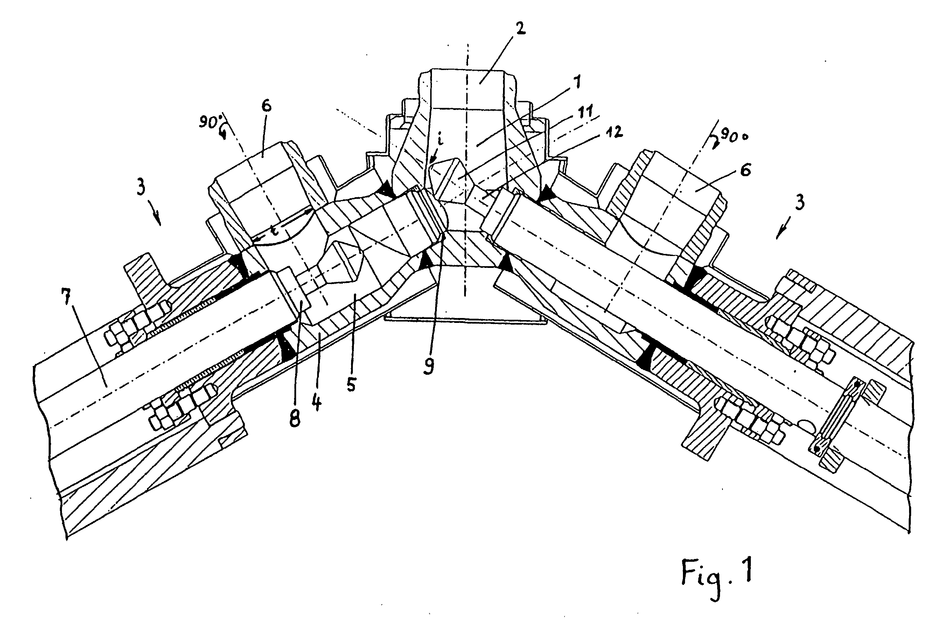

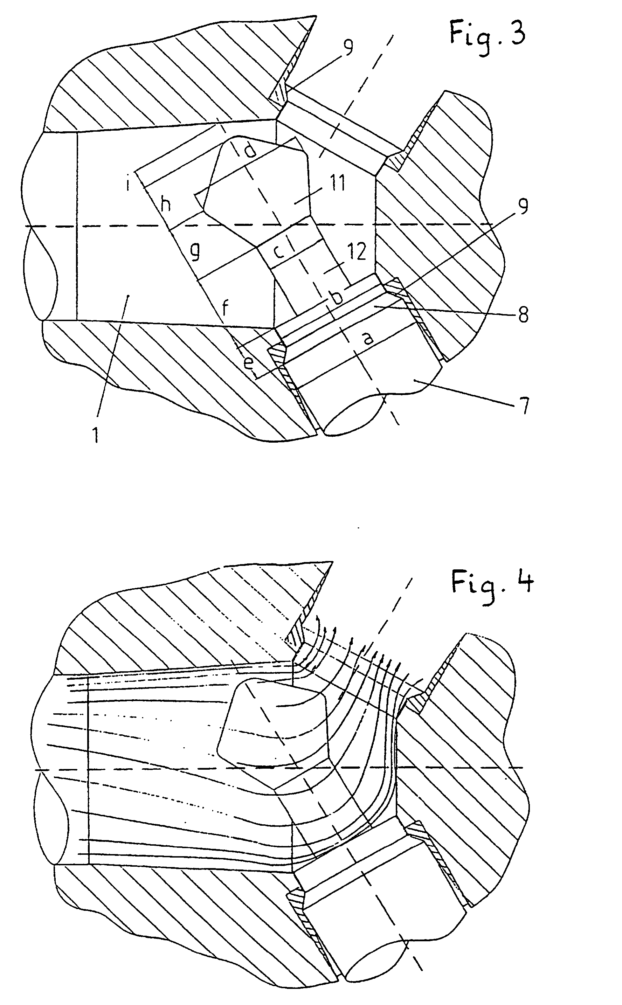

Fig. 1 zeigt einen Wechselverteiler, bestehend aus der in den zentralen Verteilungsraum (1) mündenden Produktleitung I (2) und den beiden Produktventilen (3) (nicht vollständig dargestellt). Die Produktleitungen II (6) sind bis 90° nach unten orientiert. Das rechte Produktventil (3) ist in geschlossener Position und das linke in geöffneter Ventilposition dargestellt. Die Produktventile (3) selbst entsprechen mit Ausnahme der Geometrie des pilzförmigen Verdrängeraufsatzes (11), denen des US-Patentes 5 269 348. Das Gehäuse (4) ist auf der der Abzweigung der Produktleitung II (6) gegenüberliegenden Seite erweitert (5), so daß in Zusammenwirken der Erweiterung (5) mit dem Verdrängeraufsatz (11) die Haupt-Produktströmung umgelenkt und gleichmäßig auf den gesamten Querschnitt des Ventils und somit auf den gesamten Querschnitt der Ausgangsleitung (6) verteilt wird. Der im Gehäuse (4) geführte Ventilkolben (7) trägt den Ventilkopf (8), welcher in geschlossener Position in den Ventilgehäusesitz (9) mit langgezogenem Öffnungskegel eingreift. Der Ventilkopf (8) trägt einen in Fig. 3 näher beschriebenen, pilzförmigen Verdrängeraufsatz (11), welcher in geschlossener Ventilposition vollständig im Verteilungsraum (1) positioniert ist, wobei zwischen dem Verdrängeraufsatz (11) und der Wandung des Verteilungsraumes (1) lediglich ein für den Produktfluß ausreichender Spalt (i) verbleibt. Bei geöffnetem Ventil befindet sich der Verdrängeraufsatz (11), wie hier gezeigt, in Höhe der Abzweigung der Produktleitung II (6), um dort seine Stau- und Verteilungsfunktion auszuüben.

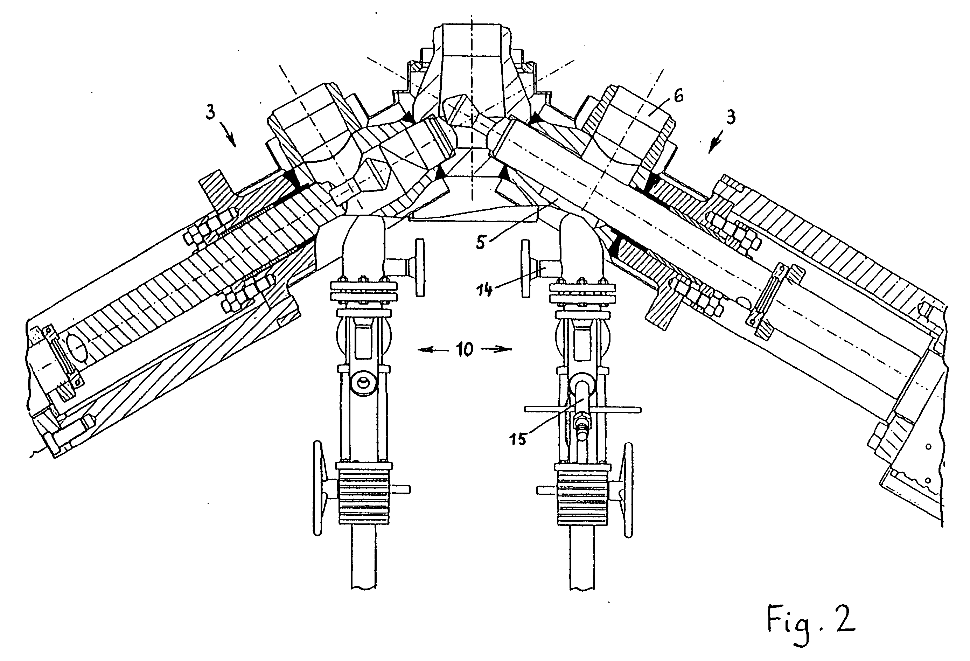

Fig. 2 zeigt einen ähnlich konstruierten Wechselverteiler, wie Fig. 1. Beide Produktventile (3) sind jedoch im Bereich der Gehäuseerweiterung (5) mit je einem Hilfsventil (10) verbunden. Über den Stutzen (14) kann das Hilfsventil (10) mit Wärmeträgerflüssigkeit beheizt werden. Über den Anschluß (15) können, falls gewünscht, Luft oder Stickstoff oder Dampf zur Hydrolyse von Polymerresten eingespeist werden.

Fig. 3 zeigt die Geometrie des Verdrängeraufsatzes (11) und dessen Position innerhalb des Verteilungsraumes (1). Die Durchmesser des Ventilkolbens (a), des Ventilsitzes (b), des Schaftes (c) und des Pilzkopfes (d) des Verdrängeraufsatzes (11), verhalten sich, wie
a : b : c = 1 : (0,75 bis 0,90) : (0,4 bis 0,5),
mit d = (0,90 bis 0,99) · b.

Die Höhen des Ventilkopfes (e), des Schaftes (f), des Unterteils (g) und des Oberteils (h) der Kappe des pilzförmigen Verdrängeraufsatzes (11), sowie die Breite (i) des Spaltes zwischen Aufsatz und Wandung bei geschlossenem Ventil, verhalten sich wie
e : f : g : h : i = (0,6 bis 0,8) : (1,3 bis 1,7) : 1 : (0,95 bis 1,05) : (0,2 bis 0,35),
wobei d = (0,9 bis 1,1) · (g + h),
e + f + g = (1,0 bis 1,05) - t
und t der Durchmesser der Produktleitung II (6) an der Abzweigung ist.

Diese Geometrie des Verdrängeraufsatzes (11) bewirkt in Verbindung mit der Geometrie des Verteilungsraumes (1) und der y-förmigen Anordnung von Produktleitung I (2) und Produktventilen (3) eine über den gesamten Querschnitt gleichmäßige Produktströmung, wie in Fig. 4 durch Pfeile dargestellt. Insbesondere weist der Verteilungsraum (1) keine senkrecht zum Produktfluß verlaufenden Flächen oder Kanten auf, vielmehr verlaufen all Flächen und Kanten in einem spitzen oder stumpfen Winkel zum Produktfluß. Die Mittellinien der Produktventile (3) bilden einen Winkel von 100 bis 140°, vorzugsweise 120° zueinander und von 50 bis 70° zur Mittellinie der Produktleitung I (2). Die Produktleitungen II (6) sind bevorzugt waagerecht bis 90° senkrecht nach unten gerichtet ausgeführt.

## Patentansprüche

1. Wechselverteiler für hochviskose Flüssigkeiten, welcher einen zentralen Verteilungsraum (1), in dem eine Produktleitung I (2) und zwei Produktventile (3) münden, aufweist, wobei jedes der Produktventile (3) aus einem als Führungszylinder ausgebildeten Gehäuse (4) mit einer seitlich abzweigenden Produktleitung II (6) und einer Gehäuseerweiterung (5) auf der der Abzweigung der Produktleitung II (6) gegenüberliegenden Seite, sowie einem im Gehäuse in axialer Richtung beweglichen Ventilkolben (7) mit Ventilkopf (8), der in geschlossener Position in einen in die Wandung des zentralen Verteilungsraum (1) eingelassenen Ventilsitz (9) eingreift, und wahlweise einem Hilfsventil (10) besteht,
wobei die beiden Produktventile (3) Y-förmig zur Produktleitung I (2) angeordnet sind, wobei die Mittellinien der beiden Produktventile (3) in einem Winkel von 100 bis 140° zueinander und in einem Winkel von 50 bis 70° zur Mittellinie der Produktleitung I (2) verlaufen,
wobei der Ventilkopf (8) einen pilzförmigen Verdrängeraufsatz (11) aufweist, welcher bei geschlossenem Ventil vollständig in den zentralen Verteilungsraum (1) unter Ausbildung eines den Produktfluss ermöglichenden Spaltes (i) zur Wandung des Verteilerraumes positioniert ist, und dessen Schaft (12) bei geöffnetem Ventil in Höhe der Abzweigung der Produktleitung II (6) positioniert ist,
wobei der zentrale Verteilungsraum (1) einschließlich des in ihm positionierten Verdrängeraufsatzes (11) nur Flächen und Kanten aufweist, die in einem spitzen oder stumpfen Winkel zu dem Produktfluss verlaufen, unter Ausschluss von senkrecht zum Produktfluss angeordneten Flächen oder Kanten,
und wobei sich die Durchmesser des Ventilkolbens (a), des Ventilsitzes (b), des Schaftes (c) und des Pilzkopfes (d) des Verdrängeraufsatzes wie a : b : c = 1 : (075 bis 0,90) : (0,4 bis 0,5), mit d = (0,90 bis 0,99) · b verhalten,
und sich die Höhen des Ventilkopfes (e), des Schaftes (f), des Unterteils (g) und des Oberteils (h) der Kappe des pilzförmigen Verdrängeraufsatzes, sowie die Breite (i) des Spaltes zwischen Aufsatz und Wandung bei geschlossenem Ventil, wie e : f : g : h : i = (0,6 bis 0,8) : (1,3 bis 1,7) : 1 : (0,95 bis 1,05) : (0,2 bis 0,35) verhalten,
wobei d = (0,9 bis 1,1) · (g + h),
e + f + g = (1,0 bis 1,05) t und t der Durchmesser der Produktleitung II an der Abzweigung ist.

2. Wechselverteiler nach Anspruch 1, **dadurch gekennzeichnet, dass** der Ventilsitz (9) einen langgezogenen Öffnungskegel aufweist.

3. Wechselverteiler nach einem der Ansprüche 1 bis 2, **dadurch gekennzeichnet, dass** das Produktventilgehäuse (4) im Bereich der Gehäuseerweiterung (5) einen Ventilsitz (13) aufweist, in den der Ventilkopf eines innerhalb eines als Führungszylinder ausgebildeten Gehäuses beweglichen Ventilkolbens eines Hilfsventils (10) in geschlossener Position eingreift, wobei das Hilfsventil (10) wahlweise mit verschließbaren Leitungen (15) zur Entlüftung und/oder Entleerung und/oder Einspeisung von Hilfsmitteln verbunden ist.

4. Wechselverteiler nach Anspruch 3, **dadurch gekennzeichnet, dass** das Hilfsventil (10) mit einer Leitung (15) zur Einspeisung von Gasen oder Dampf verbunden ist.

5. Wechselverteiler nach Anspruch 4, **dadurch gekennzeichnet, dass** die Gase oder der Dampf bei geöffnetem Hilfsventil (10) durch das Gehäuse des Hilfsventils und das Gehäuse des Produktventils (3) strömen und über Entleerungsöffnungen wieder austreten.

6. Wechselverteiler nach einem der Ansprüche 1 bis 5, **dadurch gekennzeichnet, dass** der Wechselverteiler und gegebenenfalls das Hilfsventil beheizbar sind.

7. Wechselverteiler nach einem der Ansprüche 1 bis 6, **dadurch gekennzeichnet, dass** die hochviskose Flüssigkeit wahlweise über die Produktleitung I (2) zugeführt und über die Produktleitungen II (6) abgeführt wird oder über die Produktleitungen II (6) zugeführt und über Produktleitung I (2) abgeführt wird.

## Claims

1. An alternating distributor for high-viscosity liquids, which comprises a central distribution chamber (1) into which a product line I (2) and two product valves (3) discharge, each of the product valves (3) consisting of a housing (4) constructed as a guide cylinder having a laterally branching product line II (6) and a housing enlargement (5) on the side opposite the branching of product line II (6), and also a valve piston (7) with valve block (8) movable in the housing in the axial direction which in the closed position engages in a valve seat (9) inset into the wall of the central distribution chamber (1), and optionally an auxiliary valve (10),
both product valves (3) being in a Y-shaped arrangement relative to product line I (2), the centre lines of the two product valves (3) running at an angle of 100 to 140° to one another and at an angle of 50 to 70° to the centre line of product line I (2),
the valve block (8) having a mushroom-shaped displacer headpiece (11) which, when the valve is closed, is positioned fully in the central distribution chamber (1), forming a gap (i) relative to the wall of the distribution chamber allowing product flow, and the shaft (12) of which when the valve is open is positioned at the level of the branching of product line II (6),
the central distribution chamber (1) including the displacer headpiece (11) positioned therein having only surfaces and edges which run at an acute or obtuse angle to the flow of product, with exclusion of surfaces or edges arranged perpendicular to the product flow,
and the diameters of the valve piston (a), the valve seat (b), the shaft (c) and the mushroom head (d) of the displacer headpiece being in the ratio a : b : c = 1 : (0.75 to 0.90) : (0.4 to 0.5), with d = (0.90 to 0.99) · b,
and the heights of the valve block (e), the shaft (f), the lower part (g) and the upper part (h) of the cap of the mushroom-shaped displacer headpiece, and the width (i) of the gap between the headpiece and the wall when the valve is closed, being in the ratio e : f : g : h : i = (0.6 to 0.8) : (1.3 to 1.7) : 1 : (0.95 to 1.05) : (0.2 to 0.35),
with d = (0.9 to 1.1) · (g + h),
e + f + g = (1.0 to 1.05) · t and t is the diameter of the product line II at the branching point.

2. An alternating distributor according to Claim 1, **characterised in that** the valve seat (9) has an elongated opening cone.

3. An alternating distributor according to one of Claims 1 to 2, **characterised in that** in the region of the housing enlargement (5) the product valve housing (4) has a valve seat (13) into which the valve block of a valve piston of an auxiliary valve (10) in the closed position engages, said valve piston being movable inside a housing constructed as a guide cylinder, the auxiliary valve (10) being optionally connected to sealable lines (15) for venting and/or discharging and/or feeding in auxiliary agents.

4. An alternating distributor according to Claim 3, **characterised in that** the auxiliary valve (10) is connected to a line (15) for feeding in gases or steam.

5. An alternating distributor according to Claim 4, **characterised in that** when the auxiliary valve (10) is open the gases or the steam flow through the housing of the auxiliary valve and the housing of the product valve (3) and exit again via emptying apertures.

6. An alternating distributor according to one of Claims 1 to 5, **characterised in that** the alternating distributor and optionally the auxiliary valve are heatable.

7. An alternating distributor according to one of Claims 1 to 6, **characterised in that** the high-viscosity liquid is optionally fed in via product line I (2) and carried away via product lines II (6) or is fed in via product lines II (6) and carried away via product line I (2).

## Revendications

1. Répartiteur alterné de liquides très visqueux, qui comporte une chambre (1) centrale de répartition dans laquelle débouche un conduit I (2) de produit et deux vannes (3) de produit, chacune des vannes (3) de produit étant constituée d'un corps (4) en forme de cylindre de guidage et ayant un conduit II (6) de produit en dérivation latérale et un élargissement (5) du corps du côté opposé à la dérivation du conduit II (6) de produit, ainsi qu'un piston (7) de vanne, mobile dans le corps en direction axiale et ayant une tête (8) de vanne qui, en position fermée, pénètre dans un siège (9) de vanne encastrée dans la paroi de la chambre (1) centrale de répartition et constitue au choix une vanne (10) auxiliaire,
dans lequel les deux vannes (3) de produit sont disposées en forme d'Y par rapport au conduit I (2) de produit, les lignes médianes des deux vannes (3) de produit faisant entre elles un angle de 100 à 140° et faisant un angle de 50 à 70° avec la ligne médiane du conduit I (2) de produit,
dans lequel la tête (8) de vanne a un chapeau (11) de refoulement en forme de champignon qui, lorsque la vanne est fermée, est en position complètement dans la chambre (1) centrale de répartition avec formation d'un intervalle (i), permettant un flux de produit, avec la paroi de la chambre du répartiteur et dont la tige (12), lorsque la vanne est ouverte, est en position au niveau de la dérivation du conduit II (6) de produit
dans lequel la chambre (1) centrale de répartition a, y compris le chapeau (11) de refoulement qui y est placé, seulement des surfaces et des bords qui font un angle aigu ou obtus avec le flux du produit, en excluant des surfaces ou des bords perpendiculaires au flux du produit,
et dans lequel les diamètres du piston (a) de vanne, du siège (b) de vanne, de la tige (c) et de la tête (d) en champignon du chapeau de refoulement sont tels que a : b : c = 1: (0,75 à 90) : (0,4 à 0,5) avec d = (0,90 à 0,99).b
et les hauteurs de la tête (e) de vanne, de la tige (f), de la partie (g) inférieure et de la partie (h) supérieure du capuchon du chapeau de refoulement en forme de champignon, ainsi que la largeur (i) de l'intervalle entre le chapeau et la paroi lorsque la vanne est fermée sont telles que e : f: g: h: i = (0,6 à 0,8) : (1,3 à 1,7) : 1 (0,95 à 1,05) : (0,2 à 0,35)
avec d = (0,9 à 1,1). (g + h)
e + f +g = (1, 0 à 1,05). t et t est le diamètre du conduit II de produit à la dérivation.

2. Répartiteur alterné suivant la revendication 1, **caractérisé en ce que** le siège (9) de vanne a un cône d'ouverture s'étendant en longueur.

3. Répartiteur alterné suivant l'une des revendications 1 à 2, **caractérisé en ce que** le corps (4) de vanne du produit a, dans la zone de l'élargissement (5) du corps, un siège (13) de vanne, dans lequel pénètre, en position fermée, la tête de vanne d'un piston de vanne, mobile à l'intérieur d'un corps, constitué en cylindre de guidage, d'une vanne (10) auxiliaire, la vanne (10) auxiliaire étant reliée au choix à des conduits (15) qui peuvent être fermés de mise à l'atmosphère et/ou de vidange et/ou d'alimentation en agent auxiliaire.

4. Répartiteur alterné suivant la revendication 3, **caractérisé en ce que** la vanne (10) auxiliaire est reliée à un conduit (5) d'alimentation en gaz ou en vapeur.

5. Répartiteur alterné, suivant la revendication 4, **caractérisé en ce que** les gaz ou la vapeur passent, lorsque la vanne (10) auxiliaire est ouverte, dans le corps de la vanne auxiliaire et dans le corps de la vanne (13) de produit et en ressortent par des ouvertures d'évacuation.

6. Répartiteur alterné suivant l'une des revendications 1 à 5, **caractérisé en ce que** le répartiteur alterné et, le cas échéant, la vanne auxiliaire peuvent être chauffés.

7. Répartiteur alterné suivant l'une des revendications 1 à 6, **caractérisé en ce que** le liquide très visqueux est au choix apporté par le conduit I (2) de produit et évacué par les conduits II (6) de produit ou est apporté par les conduits II (6) de produit et est évacué par le conduit I (2) de produit.
